# EUROPÄISCHE PATENTSCHRIFT

(11) **EP 2 004 031 B1**
(45) Veröffentlichungstag und Bekanntmachung des Hinweises auf die Patenterteilung: **07.09.2016**
(21) Anmeldenummer: 07722177.8
(22) Anmeldetag: 05.04.2007
(51) Int. Cl.: A47L 15/42, D06F 39/00, G01K 1/14

(54) **SENSOR ZUR TRÜBUNGS- UND TEMPERATURMESSUNG**
SENSOR FOR MEASURING TURBIDITY AND TEMPERATURE
CAPTEUR DE MESURE DE TURBIDITE ET DE TEMPERATURE

(30) Priorität: 08.04.2006 DE 102006016706
(43) Veröffentlichungstag der Anmeldung: 24.12.2008
(73) Patentinhaber: Marquardt GmbH, 78604 Rietheim-Weilheim (DE)
(72) Erfinder: KAMPF, Florian, 78532 Tuttlingen (DE)
(74) Vertreter: Otten, Roth, Dobler & Partner mbB Patentanwälte
(86) Internationale Anmeldenummer: PCT/DE2007/000619
(87) Internationale Veröffentlichungsnummer: WO 2007/115557

(56) Entgegenhaltungen:
- EP-A- 1 245 713
- EP-A1- 1 335 060
- WO-A-2005/061775
- US-A- 5 444 531

## Beschreibung

Die Erfindung betrifft einen Sensor nach dem Oberbegriff des Patentanspruchs 1.

Derartige Sensoren werden zur Trübungsmessung für die Waschtechnik verwendet. Insbesondere sind diese Sensoren für Haushaltsgeräte, wie Waschmaschinen, Geschirrspülmaschinen o. dgl., bestimmt.

Aus der DE 10 2004 042 727 A1 ist ein Trübungssensor für Haushaltsgeräte bekannt, der einen Sender sowie einen Empfänger für optische Strahlung, insbesondere für Infrarot-Strahlung zur Messung der Trübung einer Flüssigkeit besitzt. Bei diesem Sensor befindet sich zwischen dem Sender und dem Empfänger die Meßstrecke für die Flüssigkeit. Obwohl nicht explizit in dieser Offenlegungsschrift beschrieben, ist es geläufig, ein Gehäuse für den Sensor vorzusehen.

Soweit die Temperatur der Flüssigkeit gemessen werden soll, kann im Haushaltsgerät weiter ein Temperatursensor mit einem Temperaturfühler befindlich sein. In Waschgeräten für die Haushaltstechnik werden Trübungssensoren sowie Temperatursensoren gewöhnlich als zwei getrennte Bauteile eingesetzt. Der Aufwand ist entsprechend hoch. Es sind zwei gedichtete Sensoraufnahmen im Waschgerät vorzusehen und es werden zwei Kabel mit den jeweiligen Steckern benötigt.

Aus der US 5 444 531 A, WO 2005/061775 A1 und EP 1 245 713 A1 ist weiter ein in der Art eines Kombisensors ausgebildeter Sensor zur Messung der Trübung und der Temperatur der als Waschmedium verwendeten Flüssigkeit bekannt. Bei diesem Sensor ist der Temperaturfühler im und/oder am Gehäuse angeordnet. Das Gehäuse besteht aus einem Basisteil sowie wenigstens einem Ansatz. Der Ansatz dient zur Aufnahme des Senders und/oder des Empfängers, wobei ein Ansatz zur Aufnahme des Senders und ein weiterer Ansatz am Basisteil zur Aufnahme des Empfängers vorhanden ist, und wobei der Temperaturfühler in einem weiteren Gehäuseansatz in der Art einer Ausbauchung angeordnet ist.

Es kann der Temperaturfühler in einer Verlängerung eines der Ansätze am Basisteil des Sensors untergebracht sein, wie beim Sensor gemäß der EP 1 335 060 A1 gezeigt ist. In diesem Fall ragt jedoch der Sensor um einiges weiter ins Waschmedium hinein, als es die eigentliche Trübungs-Meßstrecke erfordert. Die große Entfernung des Temperaturfühlers von der die Optoelektronik-Bauteile tragenden Leiterplatte erfordert dann im Innern des Gehäuses einen zusätzlichen Führungsrahmen aus Kunststoff, der den Temperaturfühler in Position hält. Die enge Nachbarschaft der zur thermischen Ankoppelung des Temperaturfühlers zur Gehäusewand nötigen Wärmeleitpaste zum direkt darunter sitzenden Optoelektronikteil erfordert besondere Abdicht- und Fertigungsmaßnahmen. Auch dafür wird der zusätzliche Führungsrahmen benötigt. Ein derartiger Kombisensor erfordert damit einen erhöhten Fertigungsaufwand und eine Vergrößerung des Einbauraumes im Waschgerät. Letzteres ist insbesondere in Waschmaschinen, wo die drehende Trommel sehr nah an dem den Sensor aufnehmenden Laugenbehälter der Waschmaschine sitzt, eher nachteilig. Ein solcher weit ausladender Sensor läßt daher keinen einfachen Austausch eines vorhandenen Trübungssensors durch einen Kombisensor mit Trübungs- sowie zusätzlicher Temperaturmessung zu.

Der Erfindung liegt die Aufgabe zugrunde, einen in der Art eines Kombisensors ausgebildeten Sensor zur Messung der Trübung sowie der Temperatur einer Flüssigkeit in kleiner Bauweise zu schaffen. Insbesondere soll ein Kombisensor zur Trübungs- und Temperaturmessung geschaffen werden, ohne daß die Außenmaße über die des Trübungssensors allein vergrößert sind, ohne daß zusätzliche Bauelemente im Sensorinneren benötigt werden, und ohne daß eine Gefährdung des optischen Strahlenganges durch ein Wärmeleitmittel zu besorgen ist.

Diese Aufgabe wird bei einem gattungsgemäßen Sensor durch die kennzeichnenden Merkmale des Anspruchs 1 gelöst.

Beim erfindungsgemäßen Sensor ist in platzsparender Weise der Gehäuseansatz für den Temperaturfühler zwischen den Ansätzen für den Sender sowie den Empfänger befindlich. Damit die optische Strahlung in der optischen Meßstrecke zwischen Sender und Empfänger im wesentlichen unbehindert ist, ist die Höhe des Gehäuseansatzes geringer als diejenige des Ansatzes gewählt. Bei einer solchen äußerst kompakten Anordnung wird der Temperatursensor also in einer Ausbauchung des Gehäuses des Trübungssensors aufgenommen, die zwischen den beiden, die optoelektronischen Bauteile aufnehmenden Ausbauchungen des Trübungssensors und von der Montagebasis aus unterhalb der optischen Meßstrecke liegt. Dennoch erfaßt auch der Temperaturfühler die in der Meßstrecke befindliche Flüssigkeit, wobei trotz gesteigerter Funktionalität eine kleinbauende Anordnung erzielt wird.

Insbesondere wird also vorgeschlagen, bei einem Kombisensor zur Trübungs- und Temperaturmessung den Temperaturfühler nicht in einer Gehäuseverlängerung über einem der Optoelektronik-Bauteile anzuordnen, sondern unterhalb der optischen Meßstrecke der Optoelektronik-Bauteile, beispielsweise in einer kurzen Ausbauchung zwischen den beiden Höckern für die Optoelektronik-Bauteile.

Weitere Ausgestaltungen der Erfindung sind Gegenstand der Unteransprüche.

In weiterer Ausgestaltung des erfindungsgemäßen Sensors ist der Temperaturfühler im und/oder am Basisteil befindlich. Das Basisteil dient insbesondere zur Aufnahme einer Elektronik für die Auswertung von Signalen des Senders und/oder des Empfängers und/oder des Temperaturfühlers. Zweckmäßigerweise ist das Basisteil in etwa zylinderförmig ausgestaltet. In herkömmlicher Weise können der Sender sowie der Empfänger in jeweils einem separaten Ansatz in der Art einer Ausbauchung angeordnet sein, wobei die Meßstrecke zwischen den Ansätzen befindlich ist. In kompakter Bauweise bietet es sich dann weiter an, daß der Ansatz und/oder der Gehäuseansatz höckerartig, insbesondere an der oberen Grundfläche des Zylinders für das Basisteil, angeordnet sind.

Es bietet sich an, im Gehäuse, insbesondere im Basisteil, eine Leiterplatte anzuordnen. In fertigungs- sowie montagetechnisch einfacher Art reicht die Leiterplatte mittels eines Fingers in den Ansatz und/oder den Gehäuseansatz hinein. Der Sender und/oder der Empfänger und/oder der Temperaturfühler ist auf dem Finger befestigt. Um einen weitgehend intelligenten Sensor zu schaffen, kann darüber hinaus die Elektronik zur Auswertung der Signale des Senders und/oder des Empfängers und/oder des Temperaturfühlers auf der Leiterplatte befindlich sein.

Um den Sensor in einfacher Weise im Waschgerät montieren zu können, befindet sich auf der Leiterplatte, und zwar dem Finger gegenüberliegend, ein Anschlußkontakt. Bei der Montage ist dann ein Stecker auf den Anschlußkontakt aufsteckbar. In platzsparender Art ist der Stecker an der unteren Grundfläche des Zylinders für das Basisteil einsteckbar.

Bei einer kostengünstigen Ausgestaltung des Sensors handelt es sich bei dem Sender um eine Leuchtdiode. Als Empfänger kann ein Fototransistor verwendet werden. Schließlich ist noch als Temperaturfühler ein NTC-Widerstand eingesetzt.

Um weiterhin Kosten zu sparen, kann das Gehäuse aus Kunststoff bestehen. Der im Bereich des Senders und/oder des Empfängers befindliche Kunststoff besteht bevorzugterweise aus für die optische Strahlung wenigstens teilweise transparentem Kunststoff. Dann ist es nicht nötig, in das Gehäuse ein separates Fenster einzusetzen, was wiederum vorteilhaft im Hinblick auf die Abdichtung des Sensors gegenüber der umgebenden Flüssigkeit ist.

Die mit der Erfindung erzielten Vorteile bestehen insbesondere darin, daß aufgrund der vorgeschlagenen Bauweise keine Vergrößerung der Außenabmessungen des Sensors über die des alleinigen Trübungssensors hinaus eintritt. Die Außenmaße des Kombisensors werden durch den zusätzlichen Temperaturfühler nicht vergrößert. Der Kombinsensor kann somit ohne Änderung der Geometrie im Gerät einen bisherigen alleinigen Trübungssensor ersetzen, so daß zusätzliche Funktionalitäten ohne erhöhten Aufwand erzielbar sind. Ebenso läßt sich der Kombisensor auch in sehr beengte Raumverhältnisse, wie sie beispielsweise zwischen Laugenbehältern und Trommeln von Waschmaschinen herrschen, integrieren.

Außerdem werden keine zusätzlichen Bauteile im Inneren des Gehäuses benötigt, die den Temperatursensor in Bezug zur Leiterplatte des Sensors in Position halten. Da die Leiterplatte zwischen den beiden, die Optoelektronik-Bauteile umhüllenden Höckern ohnehin nahe am Gehäuse sitzt, können die Anschlüsse des Temperaturfühlers kurz gehalten werden und die Leiterplatte durch entsprechende Kontur den Temperaturfühler von hinten direkt stützen. Damit werden der Temperaturfühler und das Wärmeleitmittel zu seiner Ankoppelung ans Gehäuse von allen Seiten sicher in Position gehalten. Die bei der bisherigen bekannten Lösung notwendige zusätzliche Kunststoffhalterung sowie Kunststoffabdichtung können entfallen.

Desweiteren wird das Wärmeleitmittel zwischen dem Gehäuse und dem Temperaturfühler auf sichere Distanz zum optischen Strahlengang des Trübungssensors gehalten, so daß eine Verfälschung der Meßwerte für die Trübung nicht zu besorgen ist. Mit der vorgeschlagenen Lösung sitzt der Temperaturfühler daher so weit weg von den Optoelektronik-Bauteilen, daß auch ohne zusätzliche Maßnahmen keine Gefahr besteht, daß Wärmeleitpaste in den optischen Strahlengang gerät.

Vorteilhafterweise sind damit kostengünstige Kombisensoren mit minimalem Platzbedarf in der jeweils vom Kunden gewünschten Applikation ermöglicht. Erweitert kann die Applikation eines Trübungssensors ohne Änderung der geometrischen Einbausituation beim Gerät des Kunden um die Temperaturmessung ergänzt werden.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: einen Längsschnitt durch einen Sensor zur Messung der Trübung sowie der Temperatur einer Flüssigkeit,
- Fig. 2: einen Schnitt entlang der Linie 2-2 in Fig. 1 und
- Fig. 3: einen Schnitt entlang der Linie 3-3 in Fig. 1.

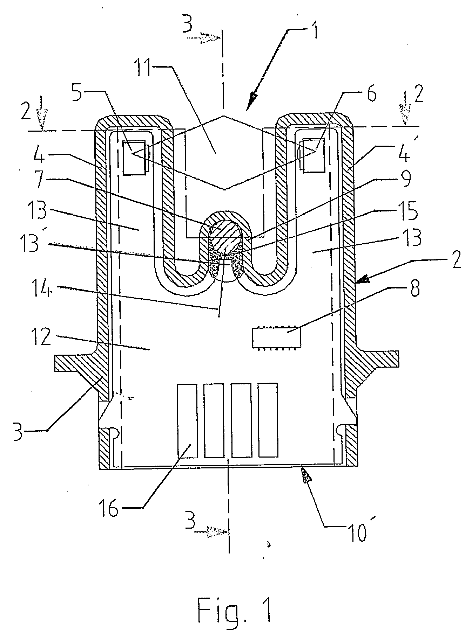

In Fig. 1 ist ein Sensor 1 in der Art eines Kombisensors zur Messung der Trübung einer Flüssigkeit sowie zur Messung der Temperatur der Flüssigkeit zu sehen. Ein solcher Sensor 1 ist für Haushaltsgeräte, wie Waschmaschinen, Geschirrspülmaschinen o. dgl., verwendbar. Zur Messung der Trübung der Flüssigkeit weist der Sensor 1 einen Sender 5 sowie einen Empfänger 6 für optische Strahlung, und zwar vorliegend für Infrarot-Strahlung, auf. Der Sender 5 sendet optische Strahlung mit einer gewissen Intensität. Aufgrund der Trübung der Flüssigkeit wird ein gewisser Anteil der Strahlung im optischen Strahlengang 11 zwischen dem Sender 5 und dem Empfänger 6 absorbiert und/oder gestreut, so daß der Empfänger 6 die optische Strahlung mit verminderter Intensität empfängt. Anhand des von der Flüssigkeit absorbierten und/oder gestreuten Anteils der optischen Strahlung entsprechend den Signalen des Senders 5 sowie des Empfängers 6 läßt sich dann die Trübung der Flüssigkeit bestimmen. Zur Messung der Temperatur der Flüssigkeit weist der Sensor 1 weiter einen Temperaturfühler 7 auf, der ein zur Temperatur korrespondierendes Signal erzeugt.

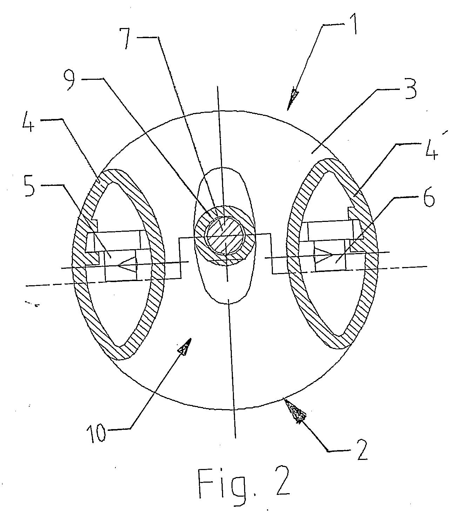

Der Sensor 1 besitzt ein Gehäuse 2, das gemäß Fig. 2 aus einem Basisteil 3 sowie aus wenigstens einem Ansatz 4 besteht. Der Ansatz 4 dient zur Aufnahme des Senders 5 und/oder des Empfängers 6. Zweckmäßigerweise ist der Sender 5 im Ansatz 4 und der Empfänger 6 in einem weiteren separaten Ansatz 4' angeordnet. Das Basisteil 3 dient zur Aufnahme einer in Fig. 1 als integrierter Baustein dargestellten Elektronik 8 für die Auswertung der Signale des Senders 5 und/oder des Empfängers 6 und/oder des Temperaturfühlers 7. Es bietet sich dann an, daß in der Elektronik 8 bereits die den Signalen entsprechenden Meßwerte für die Trübung und/oder für die Temperatur berechnet werden. Erfindungsgemäß ist der Temperaturfühler 7 ebenfalls im und/oder am Basisteil 3, d.h. außerhalb der Ansätze 4, 4' befindlich.

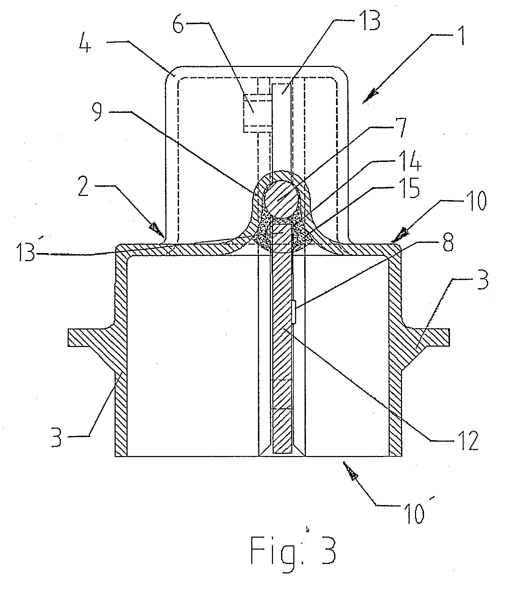

Das Basisteil 3 ist in etwa zylinderförmig ausgestaltet, wie der Fig. 2 sowie der Fig. 3 zu entnehmen ist. Die Ansätze 4, 4' für den Sender 5 sowie den Empfänger 6 sind in der Art einer Ausbauchung mit in etwa ovalem Querschnitt am Basisteil 3 angeordnet. Der Temperaturfühler 7 ist in einem Gehäuseansatz 9 ebenfalls in der Art einer Ausbauchung angeordnet, wobei der Gehäuseansatz 9 für den Temperaturfühler 7 gemäß Fig. 2 zwischen den Ansätzen 4, 4' für den Sender 5 sowie den Empfänger 6 befindlich ist. Der Ansatz 4, 4' und/oder der Gehäuseansatz 9 sind dabei höckerartig an der oberen Grundfläche 10 des Zylinders für das Basisteil 3 angeordnet. Die Höhe des Gehäuseansatzes 9 ist jedoch geringer als diejenige des Ansatzes 4, 4', was anhand von Fig. 1 zu erkennen ist, derart daß die optische Strahlung im optischen Strahlengang 11 zwischen dem Sender 5 und dem Empfänger 6 im wesentlichen unbehindert ist.

Im Gehäuse 2, und zwar im Basisteil 3, befindet sich eine Leiterplatte 12, wie weiter in Fig. 1 zu sehen ist. Die Leiterplatte 12 reicht mittels jeweils eines Fingers 13 in den Ansatz 4, 4' sowie eines weiteren Fingers 13' in den Gehäuseansatz 9 hinein. Der Sender 5 und der Empfänger 6 sind auf dem jeweiligen Finger 13 befestigt. Der Temperaturfühler 7 ist mittels in Fig. 1 sowie Fig. 3 sichtbarer Anschlußdrähte 14 an dem weiteren Finger 13' befestigt, wobei der Temperaturfühler 7 selbst mittels Wärmeleitmittel 15 in gutem thermischen Kontakt zum Gehäuse 2, nämlich zum Gehäuseansatz 9, steht, um eine reproduzierbare Temperaturmessung sicherzustellen. Auf der Leiterplatte 12 befindet sich weiter die Elektronik 8 zur Auswertung der Signale des Senders 5, des Empfängers 6 sowie des Temperaturfühlers 7. In kostengünstiger Weise läßt sich als Sender 5 eine Leuchtdiode, als Empfänger 6 ein Fototransistor sowie als Temperaturfühler 7 ein NTC-Widerstand verwenden.

Die Meßergebnisse des Sensors 1 können über eine Datenleitung zu einem Steuergerät im Haushaltsgerät weitergeleitet werden. Hierfür befindet sich auf der Leiterplatte 12, dem Finger 13, 13' gegenüberliegend, ein Anschlußkontakt 16, auf den ein nicht weiter gezeigter Stecker aufsteckbar ist. Der Stecker ist an der unteren Grundfläche 10' des Zylinders für das Basisteil 3 einsteckbar. Über den Stecker am Anschlußkontakt 16 kann selbstverständlich auch noch die Spannungsversorgung für den Sensor 1 zugeführt werden.

Das Gehäuse 2 besteht aus Kunststoff. Um den optischen Strahlengang 12 nicht zu beeinträchtigen, bietet es sich an, daß wenigstens der im Bereich des Senders 5 und/oder des Empfängers 6 befindliche Kunststoff aus für die optische Strahlung wenigstens teilweise transparentem Kunststoff besteht. Alternativ kann selbstverständlich im Bereich des optischen Strahlengangs 11 auch jeweils ein Fenster in den Ansätzen 4, 4' befindlich sein, so daß dann der Kunststoff für das Gehäuse 2 auch weitgehend undurchsichtig gewählt werden kann.

Die Erfindung ist nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. So kann ein derartiger Sensor 1 nicht nur in Haushaltsgeräten, sondern auch in Werkzeugmaschinen, Kraftfahrzeugen, beispielsweise als Ölsensor, o. dgl. Verwendung finden.

### Bezugszeichen-Liste:

- 1:: Sensor
- 2:: Gehäuse
- 3:: Basisteil (von Gehäuse)
- 4,4':: Ansatz (von Gehäuse)
- 5:: Sender
- 6:: Empfänger
- 7:: Temperaturfühler
- 8:: Elektronik
- 9:: Gehäuseansatz (für Temperaturfühler)
- 10:: (obere) Grundfläche (von Basisteil)
- 10':: (untere) Grundfläche (von Basisteil)
- 11:: (optischer) Strahlengang
- 12:: Leiterplatte
- 13,13':: Finger (von Leiterplatte)
- 14:: Anschlußdraht (für Temperaturfühler)
- 15:: Wärmeleitmittel
- 16:: Anschlußkontakt

## Patentansprüche

1. Sensor, insbesondere für Haushaltsgeräte, wie Waschmaschinen der Geschirrspülmaschinen, mit einem Sender (5) sowie einem Empfänger (6) für optische Strahlung zur Messung der Trübung einer Flüssigkeit, mit einer zwischen dem Sender (5) und dem Empfänger (6) befindlichen Meßstrecke für die Flüssigkeit, und mit einem Gehäuse (2), wobei ein Temperaturfühler (7) zur Messung der Temperatur der Flüssigkeit im und/oder am Gehäuse (2) angeordnet ist, wobei das Gehäuse (2) aus einem Basisteil (3) sowie jeweils einem separaten Ansatz (4, 4') in der Art einer Ausbauchung zur Aufnahme des Senders (5) und des Empfängers (6) besteht, wobei die Meßstrecke zwischen den Ansätzen (4, 4') befindlich ist, und wobei der Temperaturfühler (7) in einem weiteren Gehäuseansatz (9) in der Art einer Ausbauchung angeordnet ist, **dadurch gekennzeichnet, daß** der Gehäuseansatz (9) für den Temperaturfühler (7) zwischen den Ansätzen (4, 4') für den Sender (5) sowie den Empfänger (6) befindlich ist, und daß die Höhe des Gehäuseansatzes (9) geringer als diejenige des Ansatzes (4, 4') ist, derart daß die optische Strahlung zwischen Sender (5) und Empfänger (6) im wesentlichen unbehindert ist.

2. Sensor nach Anspruch 1, **dadurch gekennzeichnet, daß** der Temperaturfühler (7) im und/oder am Basisteil (3) befindlich ist, und daß vorzugsweise das Basisteil (3) zur Aufnahme einer Elektronik (8) für die Auswertung von Signalen des Senders (5) und/oder des Empfängers (6) und/oder des Temperaturfühlers (7) dient.

3. Sensor nach Anspruch 1 oder 2, **dadurch gekennzeichnet, daß** das Basisteil (3) in etwa zylinderförmig ausgestaltet ist, und daß vorzugsweise der Ansatz (4, 4') und/oder der Gehäuseansatz (9) höckerartig, insbesondere an der oberen Grundfläche (10) des Zylinders für das Basisteil (3), angeordnet ist.

4. Sensor nach Anspruch 1, 2 oder 3, **dadurch gekennzeichnet, daß** im Gehäuse (2), insbesondere im Basisteil (3), eine Leiterplatte (12) befindlich ist, daß vorzugsweise die Leiterplatte (12) mittels eines Fingers (13, 13') in den Ansatz (4, 4') und/oder den Gehäuseansatz (9) hineinreicht, daß weiter vorzugsweise der Sender (5) und/oder der Empfänger (6) und/oder der Temperaturfühler (7) auf dem Finger (13, 13') befestigt ist, und daß noch weiter vorzugsweise die Elektronik (8) auf der Leiterplatte (12) befindlich ist.

5. Sensor nach einem der Ansprüche 1 bis 4, **dadurch gekennzeichnet, daß** sich auf der Leiterplatte (12), insbesondere dem Finger (13, 13') gegenüberliegend, ein Anschlußkontakt (16) befindet, daß vorzugsweise ein Stecker auf den Anschlußkontakt (16) aufsteckbar ist, und daß weiter vorzugsweise der Stecker an der unteren Grundfläche (10') des Zylinders für das Basisteil (3) einsteckbar ist.

6. Sensor nach einem der Ansprüche 1 bis 5, **dadurch gekennzeichnet, daß** es sich bei dem Sender (5) um eine Leuchtdiode handelt, daß vorzugsweise als Empfänger (6) ein Fototransistor verwendet ist, und daß weiter vorzugsweise als Temperaturfühler (7) ein NTC-Widerstand eingesetzt ist.

7. Sensor nach einem der Ansprüche 1 bis 6, **dadurch gekennzeichnet, daß** das Gehäuse (2) aus Kunststoff besteht, und daß vorzugsweise wenigstens der im Bereich des Senders (5) und/oder des Empfängers (6) befindliche Kunststoff aus für die optische Strahlung wenigstens teilweise transparentem Kunststoff besteht.

8. Sensor nach einem der Ansprüche 1 bis 7, **dadurch gekennzeichnet, daß** es sich bei der optischen Strahlung um Infrarot-Strahlung handelt.

## Claims

1. A sensor, in particular for domestic appliances such as washing machines or dishwashers, comprising a transmitter (5) as well as a receiver (6) for optical radiation, for measuring the turbidity of a liquid, having a measuring section for the liquid located between the transmitter (5) and the receiver (6), and having a housing (2), wherein a temperature sensor (7) for measuring the temperature of the liquid is arranged in and/or on the housing (2), wherein the housing (2) is made up of a base part (3) as well as in each case a separate attachment (4, 4') in the manner of a bulge for the accommodation of the transmitter (5) and the receiver (6), wherein the measuring section is located between the attachments (4, 4') and wherein the temperature sensor (7) is arranged in a further housing attachment (9) in the manner of a bulge, **characterized in that** the housing attachment (9) for the temperature sensor (7) is located between the attachments (4, 4') for the transmitter (5) as well as the receiver (6), and that the height of the housing attachment (9) is less than that of the attachment (4, 4), such that the optical radiation between transmitter (5) and receiver (6) is substantially unhindered.

2. A sensor according to Claim 1, **characterized in that** the temperature sensor (7) is located in and/or on the base part (3), and that preferably the base part (3) serves for accommodating an electronics assembly (8) for the evaluation of the signals of the transmitter (5) and/or the receiver (6) and/or the temperature sensor (7).

3. A sensor according to Claim 1 or 2, **characterized in that** the base part (3) is designed approximately cylindrically, and that preferably the attachment (4, 4') and/or the housing attachment (9) is arranged bump-like, in particular on the upper surface area (10) of the cylinder for the base part (3).

4. A sensor according to Claim 1, 2 or 3, **characterized in that** in the housing (2), in particular, in the base part (3) a printed circuit board (12) is located, that preferably the printed circuit board (12) extends into the attachment (4, 4') and/or the housing attachment (9) by means of a finger (13, 13'), that more preferably the transmitter (5) and/or the receiver (6) and/or the temperature sensor (7) is attached to the finger (13, 13'), and that even more preferably the electronics assembly (8) is located on the printed circuit board (12).

5. A sensor according to any one of Claims 1 to 4, **characterized in that** a connection contact (16) is located on the printed circuit board (12), in particular opposite the finger (13, 13'), that preferably a plug can be plugged on the connection contact (16), and that more preferably the plug can be plugged into the lower surface area (10') of the cylinder for the base part (3).

6. A sensor according to any one of Claims 1 to 5, **characterized in that** the transmitter (5) is a light-emitting diode, that preferably a photo transistor is used as receiver (6), and that more preferably a NTC resistor is used as temperature sensor (7).

7. A sensor according to any one of Claims 1 to 6, **characterized in that** the housing (2) consists of plastic, and that preferably at least the plastic located in the area of the transmitter (5) and/or the receiver (6) consists of plastic at least partially transparent for the optical radiation.

8. A sensor according to any one of Claim 1 to 7, **characterized in that** the optical radiation is infrared radiation.

## Revendications

1. Capteur, en particulier pour appareils ménagers, tels que machines à laver ou lave-vaisselle, avec un émetteur (5) ainsi qu'avec un récepteur (6) pour rayonnement optique, destiné à la mesure de la turbidité d'un liquide, avec, pour le liquide, un parcours de mesure situé entre l'émetteur (5) et le récepteur (6), et avec un boîtier (2), une sonde de température (7) destinée à la mesure de la température du liquide étant disposée dans et/ou sur le boîtier (2), le boîtier (2) se composant d'une partie de base (3) ainsi que respectivement d'un embout (4, 4') séparé à la façon d'un renflement destiné à loger l'émetteur (5) et le récepteur (6), le parcours de mesure étant situé entre les embouts (4, 4'), et la sonde de température (7) étant disposée dans un autre embout de boîtier (9) à la façon d'un renflement, **caractérisé en ce que** l'embout de boîtier (9) pour la sonde de température (7) est situé entre les embouts (4, 4') pour l'émetteur (5) ainsi que pour le récepteur (6), et **en ce que** la hauteur de l'embout de boîtier (9) est plus petite que celle de l'embout (4, 4') de telle sorte que le rayonnement optique entre l'émetteur (5) et le récepteur (6) n'est essentiellement pas gêné.

2. Capteur selon la revendication 1, **caractérisé en ce que** la sonde de température (7) est située dans et/ou sur la partie de base (3), et **en ce que** de préférence la partie de base (3) sert à loger un équipement électronique (8) pour l'analyse de signaux de l'émetteur (5) et/ou du récepteur (6) et/ou de la sonde de température (7).

3. Capteur selon la revendication 1 ou 2, **caractérisé en ce que** la partie de base (3) est constituée de façon à peu près cylindrique, et **en ce que** de préférence l'embout (4, 4') et/ou l'embout de boîtier (9) est disposé à la façon d'une bosse, en particulier sur la surface de base (10) supérieure du cylindre pour la partie de base (3).

4. Capteur selon la revendication 1, 2 ou 3 **caractérisé en ce que**, dans le boîtier (2), en particulier dans la partie de base (3), il y a un circuit imprimé (12), **en ce que** de préférence le circuit imprimé (12) arrive, au moyen d'un doigt (13, 13'), jusque dans l'embout (4, 4') et/ou jusque dans l'embout de boîtier (9), **en ce que**, de façon plus préférée, l'émetteur (5) et/ou le récepteur (6) et/ou la sonde de température (7) est fixé(e) sur le doigt (13, 13'), et **en ce que**, de façon encore plus préférée, l'équipement électronique (8) est situé sur le circuit imprimé (12).

5. Capteur selon l'une des revendications 1 à 4, **caractérisé en ce qu'**un contact de connexion (16) se trouve sur le circuit imprimé (12), en particulier en face du doigt (13, 13'), **en ce que** de préférence un connecteur peut être enfiché sur le contact de connexion (16), et **en ce que**, de façon plus préférée, le connecteur peut être enfiché sur la surface de base (10') inférieure du cylindre pour la partie de base (3).

6. Capteur selon l'une des revendications 1 à 5, **caractérisé en ce que**, concernant l'émetteur (5), il s'agit d'une diode lumineuse, **en ce que** de préférence un phototransistor est utilisé en tant que récepteur (6), et **en ce que** de façon plus préférée, une résistance NTC est mise en oeuvre en tant que sonde de température (7).

7. Capteur selon l'une des revendications 1 à 6, **caractérisé en ce que** le boîtier (2) est composé de matière plastique, et **en ce que** de préférence au moins la matière plastique située dans la zone de l'émetteur (5) et/ou du récepteur (6) est composée de matière plastique au moins partiellement transparente au rayonnement optique.

8. Capteur selon l'une des revendications 1 à 7, **caractérisé en ce que**, concernant le rayonnement optique, il s'agit de rayonnement infrarouge.
